# EUROPÄISCHE PATENTSCHRIFT

(11) **EP 1 465 450 B1**
(45) Veröffentlichungstag und Bekanntmachung des Hinweises auf die Patenterteilung: **25.03.2009**
(21) Anmeldenummer: 04001871.5
(22) Anmeldetag: 29.01.2004
(51) Int. Cl.: H04W 4/00

(54) **Statusinformation betreffend Mobiltelephone im Parallelbetrieb**
Status information about mobile telephones operated in parallel
Information d'état de téléphones mobiles opérés en parallèle

(30) Priorität: 04.04.2003 DE 10315312
(43) Veröffentlichungstag der Anmeldung: 06.10.2004
(73) Patentinhaber: Deutsche Telekom AG, 53113 Bonn (DE)
(72) Erfinder: Bindel, Frank, 53639 Königswinter (DE); Brackmann, Ludwig, Dipl.-Ing., 53225 Bonn (DE)
(74) Vertreter: Braun-Dullaeus, Karl-Ulrich

(56) Entgegenhaltungen:
- WO-A-98/24257
- WO-A-02/100079
- WO-A-20/04006604

## Beschreibung

Die vorliegende Erfindung betrifft ein Verfahren zum Betreiben eines Mobilfunknetzes, wobei einem einzelnen Nutzer mindestens zwei über eine gemeinsame Netzkennung anwählbare Telefone, insbesondere Mobiltelefone, zugeordnet werden, wobei jeweils nur eines der Endgeräte über das Netz erreichbar ist, wobei die Telefone im Falle eingehender Anrufe unterschiedliche Prioritäten haben und wobei das erste erreichbare aktive Telefon mit höherer Priorität den an die gemeinsame Netzkennung gerichteten Ruf empfängt. Zudem betrifft die Erfindung ein System zur Umsetzung des Verfahrens.

Solche Verfahren sind beim Betrieb von sogenannten "Twin-Cards" bekannt. Diese ermöglichen es, unter einer einzigen Rufnummer zwei Mobiltelefone zu nutzen, ohne dass ein Wechsel des Gerätes gleich einen Austausch der SIM-Karte ("Subscriber Identity Modul") bedingt. Diese Systeme werden hauptsächlich dort eingesetzt, wo ein Nutzer sowohl über ein portables Mobiltelefon (Handy) und außerdem über ein mobiles Autotelefon verfügt, beide Geräte aber nur wechselweise nutzen können. Mit beiden Geräten wollen sie jedoch über eine einzige Rufnummer (Netzkennung) erreichbar sein. Aus technischen Gründen soll jedoch jeweils nur eines der Geräte über das Netz erreichbar sein. Um das zu realisieren, nutzen die Netzanbieter verschiedene Verfahren. So ist es möglich, dem zuletzt in das Netz eingebuchten Endgerät die hohe Priorität zuzuordnen. In einem anderen Verfahren erhalten die SIM-Karten von vornherein unterschiedliche Prioritäten.

Problematisch gerade bei der erst genannten Anwendung ist jedoch, dass beim Start des Wagens das Autotelefon aktiviert wird und sich ins Netz einbucht, während das zuvor aktive Mobiltelefon automatisch abgekoppelt wird. Später wird dann mit dem Abstellen des Wagens die Stromzufuhr zum Autotelefon unterbrochen. Das Netz registriert diese Unterbrechung jedoch lediglich als einen Verbindungsabbruch, ohne das Autotelefon abzumelden. Somit bleibt das Autotelefon das aktivierte Telefon und alle Anrufe werden dorthin respektive auf die Mobilbox geleitet. Um nach dem Verlassen des Wagens wieder unter seinem Mobiltelefon erreichbar zu sein, muss der Nutzer dieses aktiv beispielsweise durch Aus- und Einschalten erneut beim Netz angemeldet werden. Ein ähnliches Problem tritt auf, wenn im zweiten genannten Verfahren das in der Priorität höhere Mobiltelefon abgeschaltet wurde, um Anrufe über das andere Telefon empfangen zu können. Wird nun das Fahrzeug abgestellt und der Nutzer vergisst, das Handy neu einzuloggen, ist er bis auf weiteres nicht erreichbar, ohne dass ihm diese Tatsache in irgendeiner Weise ersichtlich ist.

Aus der WO 02/100079 A2 ist ein Verfahren zum Umleiten von Anrufen bekannt, wobei diese Umleitung aktiviert wird, wenn sich beide Telefone um mehr als einen Mindestabstand voneinander entfernen. Diese Verfahrensweise wird auch in einen gewissen Zusammenhang mit Telefonen gestellt, die mit einer Twin Card ausgestattet sind. Eine ähnliche Vorgehensweise ist aus der nachveröffentlichten WO 2004/006604 A1 bekannt.

Aufgabe der Erfindung ist es nunmehr, ein Verfahren zum Betreiben eines Mobilfunknetzes zu schaffen, das sich einfach und mit kostengünstigen Mitteln umsetzen lässt und mit dem eine möglichst durchgängige Erreichbarkeit eines Nutzers, dem mehrere Telefone zugeordnet sind, gewährleistet wird. Außerdem soll ein System zur Umsetzung des Verfahrens geschaffen werden.

Diese Aufgaben werden durch das Verfahren mit den kennzeichnenden Merkmalen des Anspruch 1 und das System nach Anspruch 9 gelöst.

Der erfindungswesentliche Grundgedanke liegt darin, Statusinformation betreffend das andere "aktive" Telefon vermittels des "passiven" Telefons für den Nutzer vernehmbar auszugeben. Dabei braucht die Ausgabe insbesondere nicht durch den Nutzer angefordert werden, sondern geschieht automatisch. Der Nutzer erhält beispielsweise einen Warnhinweis, der ihn daran erinnert, eine gewisse Handlung, beispielsweise das Einloggen seines passivierten Telefons, vorzunehmen. Mit anderen Worten zeichnet sich das erfindungsgemäße Verfahren dadurch aus, dass dem Nutzer über das zweite passive Mobiltelefon mit niedrigerer Priorität Statusinformationen betreffend den Zustand des ersten Gerätes ausgegeben werden.

Der wesentliche Vorteil dieses Verfahrens liegt auf der Hand: Mit der Erfindung wird es vermieden, dass der Nutzer durch Unachtsamkeit oder durch eine Tücke des Twin-Card Systems unerreichbar wird. Mit einer grafischen Statusanzeige oder über einen Signalton kann dem Nutzer angezeigt werden, dass eines seiner Geräte derzeit nicht angemeldet ist. Anhand dieser Anzeige oder des Signals wird der Nutzer daran erinnert, sich mit dem passiven Gerät erneut einzuloggen und vermeidet es so, unerreichbar zu sein.

Um das Verfahren in der Praxis umsetzen zu können, ist es vorteilhaft, wenn das passive Mobiltelefon nicht vollständig ausgeschaltet, sondern in einem minimalen Stand-by Modus betrieben wird, in dem es die Statusinformation empfangen und dem Nutzer anzeigen kann. In diesem Modus muss das Telefon nicht unbedingt in das Netz eingeloggt sein. Eine "interne" Empfangsbereitschaft reicht aus, wobei die Statusinformation dann vorteilhafterweise via einer direkten Nahfunkverbindung, insbesondere via Blue-Tooth, vom aktiven zum passiven Mobiltelefon übermittelt wird. Im Stand-by Modus reicht es also aus, wenn lediglich die Nahfunkverbindung und die Anzeigebereitschaft aufrechterhalten wird. Über die direkte Verbindung können in zyklischer Wiederkehr die Statusinformationen abgefragt und übertragen werden, die dann über das passive Telefon ausgegeben werden. Wenn die beiden Geräte in dieser Art direkt in Verbindung stehen, ist es auch vorteilhaft, den Abstand beider Mobiltelefone über die Signalstärke der Nahfunkverbindung zu ermitteln. Sobald der Abstand einen bestimmten Wert überschreitet, gibt das passive Gerät einen Alarm aus. Mit dieser Ausführungsform wird das klassische Problem gelöst, das der Nutzer eines Autotelefons und eines Handys hat, wenn er das Auto abstellt und vergisst das Handy zu aktivieren.

Auch wenn eine derartige Nahfunkverbindung besonders vorteilhaft ist, so könnte die Information in einem anderen Ausführungsbeispiel auch gemeinsam mit der Netznachricht übermittelt werden, die ein zuerst angemeldetes Gerät deaktiviert.

In einer besonderen Ausführungsform können die Prioritäten, die auf den SIM-Karten codiert sind, vom Nutzer selber verändert werden. Dann kann der Nutzer sich die Priorität von dem passiven Telefon aus auf dieses Gerät, von dem er ja die Information bekommen hat, umleiten. Es ist damit nicht mehr notwendig, dass der Nutzer das Gerät mit der höheren Priorität ausloggt, um die Kommunikation über das sekundäre Gerät sicherzustellen. Damit wird der Bedienungskomfort des Systems für den Nutzer beträchtlich erhöht und die Twin Cards gewinnen an Attraktivität und Leistungsfähigkeit.

Wie schon dargelegt, ist es vorteilhaft, dem Nutzer über das passive Mobiltelefon die Information, insbesondere in Form eines vernehmbaren akustischen Signals, auszugeben, sobald sich das aktive Mobiltelefon aus dem Netz ausloggt und/oder es abgeschaltet wird. Weiterhin ist es vorteilhaft, wenn das erneute Einloggen des passiven Endgerätes automatisch geschieht, sobald sich das aktive Mobiltelefon aus dem Netz ausloggt und/oder es abgeschaltet wird.

Teil der Erfindung ist auch das System zur Umsetzung des Verfahrens, wobei das System zwei über eine gemeinsame Rufnummer erreichbare Mobiltelefone aufweist. Dabei hat eines der Mobiltelefone gegenüber dem anderen eine Priorität beim Empfang eines an die Rufnummer gerichteten Rufes. Erfindungsgemäß stehen beide Mobiltelefone innerhalb eines gewissen Abstandes (Sende- und Empfangsradius) über eine Nahfunkverbindung, beispielsweise Blue Tooth oder WLAN, in unmittelbarem Kontakt miteinander und tauschen über die Verbindung Statusinformation aus. Wie dargelegt ist die Information dem Nutzer über eines der Mobiltelefone ausgebbar.

## Patentansprüche

1. Verfahren zum Betreiben eines Mobilfunknetzes, wobei einem einzelnen Nutzer mindestens zwei über eine gemeinsame Netzkennung anwählbare Endgeräte, insbesondere Mobiltelefone, zugeordnet werden, wobei jeweils nur eines der Endgeräte über das Netz erreichbar ist, wobei die Endgeräte im Falle eingehender Anrufe unterschiedliche Prioritäten haben, wobei das erste erreichbare aktive Endgerät mit höherer Priorität den an die gemeinsame Netzkennung gerichteten Ruf empfängt,
**dadurch gekennzeichnet,**
**dass** über das zweite nicht erreichbare passive Endgerät mit niedrigerer Priorität dem Nutzer eine Statusinformation betreffend den Zustand des ersten erreichbarren aktiven Endgerätes ausgegeben wird.

2. Verfahren nach Anspruch 1,
**dadurch gekennzeichnet, dass** das passive Endgerät in einem Stand-by Modus betrieben wird, in dem es die Statusinformation empfängt und dem Nutzer anzeigt.

3. Verfahren nach Anspruch 1 oder 2,
**dadurch gekennzeichnet, dass** die Statusinformation über eine direkte Nahfunkverbindung zwischen den Geräten, insbesondere über Blue-Tooth oder WLAN, vom aktiven zum passiven Endgerät übermittelt wird.

4. Verfahren nach einem der vorherigen Ansprüche,
**dadurch gekennzeichnet, dass** die Prioritäten auf den SIM-Karten ("Subscriber Identity Modul") codiert und vom Nutzer veränderbar sind.

5. Verfahren nach einem der vorherigen Ansprüche,
**dadurch gekennzeichnet, dass** dem Nutzer vom passiven Endgerät eine Information ausgegeben wird, wenn er sich mit diesem Endgerät vom aktiven Mobiltelefon entfernt, wobei der Abstand beider Endgeräte über die Signalstärke der Nahfunkverbindung ermittelt wird.

6. Verfahren nach einem der vorherigen Ansprüche,
**dadurch gekennzeichnet, dass** dem Nutzer vom passiven Endgerät eine Information ausgegeben wird, sobald sich das aktive Endgerät aus dem Netz ausloggt und/oder es abgeschaltet wird.

7. Verfahren nach Anspruch 6,
**dadurch gekennzeichnet, dass** das Einloggen des passiven Endgerätes automatisch geschieht, sobald sich das aktive Endgerät aus dem Netz ausloggt und/oder es abgeschaltet wird.

8. Verfahren nach einem der vorherigen Ansprüche,
**dadurch gekennzeichnet, dass** dem Nutzer die Information in Form eines vernehmbaren akustischen Signals ausgegeben wird.

9. System zur Umsetzung des Verfahrens nach einem der vorherigen Ansprüche, aufweisend zwei über eine gemeinsame Rufnummer erreichbare Mobiltelefone, wobei eines der Mobiltelefone gegenüber dem anderen eine Priorität beim Empfang eines an die Rufnummer gerichteten Rufes hat,
**dadurch gekennzeichnet, dass** beide Mobiltelefone geeignete Mittel enthalten, um innerhalb eines gewissen Abstandes über eine Nahfunkverbindung in unmittelbarem Kontakt miteinander zu stehen und über die Verbindung Statusinformation miteinander auszutauschen, wobei die Information dem Nutzer über eines der Mobiltelefone ausgebbar ist

## Claims

1. Method for operating a mobile network, wherein at least two terminals, in particular mobile telephones, which can be dialled via a common network identifier are assigned to a single user, wherein in each case only one of the terminals can be accessed via the network, wherein the terminals have different priorities in the case of incoming calls, wherein the first accessible active terminal with the higher priority receives the call directed to the common network identifier, **characterized in that** a status information relating to the status of the first accessible active terminal is output to the user via the second inaccessible passive terminal with the lower priority.

2. Method according to Claim 1, **characterized in that** the passive terminal is operated in a standby mode in which it receives the status information and indicates it to the user.

3. Method according to Claim 1 or 2, **characterized in that** the status information is conveyed from the active terminal to the passive terminal via a direct short-range radio link between the devices, particularly via Bluetooth or WLAN.

4. Method according to one of the preceding claims, **characterized in that** the priorities are coded on the SIM (subscriber identity module) cards and can be changed by the user.

5. Method according to one of the preceding claims, **characterized in that** the passive terminal outputs to the user an item of information when he is moving away from the active mobile telephone with this terminal, the distance between the two terminals being determined via the signal strength of the short-range radio link.

6. Method according to one of the preceding claims, **characterized in that** the passive terminal outputs to the user an item of information as soon as the active terminal logs out of the network and/or is switched off.

7. Method according to Claim 6, **characterized in that** the passive terminal is logged in automatically as soon as the active terminal logs out of the network and/or is switched off.

8. Method according to one of the preceding claims, **characterized in that** the information is output to the user in the form of a perceptible acoustic signal.

9. System for implementing the method according to one of the preceding claims, having two mobile telephones which can be accessed via a common network identifier, wherein one of the mobile telephones has a priority compared with the other one when receiving a call directed to the network identifier, **characterized in that** both mobile telephones contain suitable means for being in direct contact with one another within a certain distance via a short-range radio link and for exchanging status information with one another via the link, wherein the information can be output to the user via one of the mobile telephones.

## Revendications

1. Procédé de fonctionnement d'un réseau de radiocommunication mobile, au moins deux terminaux, notamment des téléphones mobiles, pouvant être sélectionnés par le biais d'un identifiant de réseau commun étant affectés à un utilisateur individuel, un seul des terminaux pouvant à chaque fois être joint par le biais du réseau, les terminaux ayant des priorités différentes dans le cas des appels entrants, le premier terminal actif joignable ayant la priorité la plus élevée recevant l'appel adressé à l'identifiant de réseau commun, **caractérisé en ce qu'**une information d'état concernant l'état du premier terminal actif joignable est délivrée à l'utilisateur par le biais du deuxième terminal passif non joignable.

2. Procédé selon la revendication 1, **caractérisé en ce que** le terminal passif fonctionne dans un mode de veille dans lequel il reçoit l'information d'état et l'indique à l'utilisateur.

3. Procédé selon la revendication 1 ou 2, **caractérisé en ce que** l'information d'état est communiquée par le biais d'une liaison radioélectrique de proximité entre les appareils, notamment par le biais d'une liaison Bluetooth ou WLAN du terminal actif vers le terminal passif.

4. Procédé selon l'une des revendications précédentes, **caractérisé en ce que** les priorités sont codées sur les cartes SIM (Subscriber Identity Modul - Module d'identification de l'abonné) et peuvent être modifiées par l'utilisateur.

5. Procédé selon l'une des revendications précédentes, **caractérisé en ce que** le terminal passif délivre une information à l'attention de l'utilisateur lorsqu'il s'éloigne avec ce terminal du téléphone mobile actif, la distance entre les deux terminaux étant déterminée par le biais de l'intensité du signal de la liaison radioélectrique de proximité.

6. Procédé selon l'une des revendications précédentes, **caractérisé en ce que** le terminal passif délivre une information à l'attention de l'utilisateur dès que le terminal actif se déconnecte du réseau et/ou qu'il est éteint.

7. Procédé selon la revendication 6, **caractérisé en ce que** la connexion du terminal passif s'effectue automatiquement dès que le terminal actif se déconnecte du réseau et/ou qu'il est éteint.

8. Procédé selon l'une des revendications précédentes, **caractérisé en ce que** l'information est délivrée à l'utilisateur sous la forme d'un signal sonore perceptible.

9. Système pour mettre en oeuvre un procédé selon l'une des revendications précédentes, présentant deux téléphones mobiles pouvant être joints par le biais d'un numéro d'appel commun, l'un des téléphones mobiles étant prioritaire par rapport à l'autre lors de la réception d'un appel adressé au numéro d'appel, **caractérisé en ce que** les deux téléphones mobiles contiennent des moyens appropriés pour être en contact l'un avec l'autre au sein d'un certaine distance par le biais d'une liaison radioélectrique de proximité et pour échanger entre eux un information d'état par le biais de la liaison, l'information pouvant être délivrée à l'utilisateur par le biais de l'un des téléphones mobiles.
